# EUROPÄISCHE PATENTANMELDUNG

(11) **EP 0 878 430 A2**
(43) Veröffentlichungstag der Anmeldung: **18.11.1998**
(21) Anmeldenummer: 98108704.2
(22) Anmeldetag: 13.05.1998
(51) Int. Cl.: B66B 11/04, H02K 7/10

(54) **Hebevorrichtung, insbesondere Aufzug, mit einem Elektromotor und Verwendung des Elektromotors**

(30) Priorität: 16.05.1997 DE 19720479
(71) Anmelder: BAUMÜLLER NÜRNBERG GMBH, D-90482 Nürnberg (DE)
(72) Erfinder: Seehuber, Michael, Dr., 92318 Neumarkt i. d. Oberpfalz (DE); Sept, Helmut, 91522 Ansbach (DE)
(74) Vertreter: Götz, Georg, Dipl.-Ing.

(57) **Zusammenfassung**

Hebevorrichtung, insbesondere Aufzug, mit einem rotatorischen Elektromotor, dessen Läufer mit einem Treiborgan, beispielsweise Treibscheibe oder Seilrolle, gekoppelt ist, und das Treiborgan mit einem linear geführten Fahrbehältnis zum Transport von Sachen und Personen verbunden ist, wobei als Elektromotor ein Außenläufermotor angeordnet ist, bei dem der Außenläufer den Ständer koaxial und/oder ringförmig umgibt.

## Beschreibung

Die Erfindung betrifft eine Hebevorrichtung, insbesondere einen Aufzug, mit einem rotatorischen Elektromotor, dessen Läufer mit einem Treiborgan, beispielsweise Treibscheibe oder Seilrolle, gekoppelt ist, und das Treiborgan mit einem lineargeführten Fahrbehältnis zum Transport von Sachen und Personen verbunden ist. Ferner betrifft die Erfindung die Verwendung des Elektromotors in einer derartigen Hebevorrichtung.

Aufzüge befördern Personen und Güter. Sie besitzen eine Fahrschacht- und Fahrkorbtüre. Der Antrieb ist meist über dem Fahrschacht in einem Maschinenraum untergebracht und bewegt über Treibscheiben Fahrkorb und ein Gegengewicht. Höchsten Ansprüchen bezüglich Beschleunigungs- und Verzögerungsverhalten, Fahrgeschwindigkeit und Haltegenauigkeit werden bei Aufzügen stufenlos regelbare Gleichstrommotoren in Leonhard-Schaltung gerecht.

Hebezeuge mit Elektroantrieben sind bekannt. Zur Reduzierung des Bauvolumens und zur Erzielung einer einfachen Montage wird ein getriebeloser Hebezeugantrieb in der Offenlegungsschrift DE 42 33 759 A1 vorgeschlagen, bei der eine Treibscheibe, ein Außenläufer eines Elektromotors und eine Bremse das gemeinsame Gehäuse des Hebezeugantriebes bilden. Der Außenläufer ist in der Treibscheibe angeordnet bzw. Bestandteil des gemeinsamen Blechpaketes. Ferner ist ein Käfigläufermotor für ein Hebezeug, insbesondere für einen Aufzug bekannt (Offenlegungsschrift DE 32 16 978 A1), bei dem der Stator auf einer ortsfesten Achse drehsicher gehalten ist, während der den Stator umschließende Käfigläufer auf der selben Achse drehbar gelagert ist. Der Käfigläufer ist mit einer kreiszylindrischen Umfangswandung verbunden, deren Oberfläche in Umfangsrichtung mit Seilrillen versehen ist, so daß keine zusätzliche Antriebsscheibe erforderlich ist. In der deutschen Auslegeschrift 1 236 750 ist ein Aufzuggetriebe mit Drehstrommotor beschrieben, bei der eine Doppelbackenbremse Einsatz findet. Die Seilscheibe ist über Getriebe mit der Welle des Elektroantriebs verbunden. In dem US-Patent 5 018 603 sind Ausführungsformen für Aufzugantriebe mit Außen- und Innenläufer-Elektromotoren offenbart. Die Seilscheibe ist einstückig mit dem Außenläufer integriert. Aus der US-Patentschrift 4 739 969 wird für den Aufzugantrieb ein Innenläufer mit Dauermagnetbestückung vorgeschlagen. Elektromagnetisch betätigte Bremsbacken sind innerhalb des Elektromotors angeordnet.

Der Erfindung liegt die Aufgabe zugrunde, für eine Hebevorrichtung, insbesondere einen Aufzug, der eingangs genannten Art einen Elektroantrieb zu schaffen, der sich durch möglichst kompakte und geringe Baugröße auszeichnet, um möglichst Bauraum im Hebe- bzw. Aufrugschacht einzusparen. Gleichzeitig soll ein hohes Drehmoment gewährleistet und eine Verbindung mit dem Treiborgan ohne zwischengeschaltetes Getriebe möglich sein. Zur Lösung wird bei einer Hebevorrichtung mit den eingangs genannten Merkmalen erfindungsgemäß vorgeschlagen, daß als Elektromotor ein Außenläufermotor angeordnet wird, bei dem der Läufer den Ständer koaxial oder ringförmig umgibt. Außenläufermotoren zeichnen sich durch großes Schwungmoment sowie kleine Drehzahlschwankungen aus, was sich vorteilhaft auf die Laufruhe und -gleichmäßigkeit des Fahrkorbs bzw. - behältnisses auswirkt. Indem der rotatorische Teil des Elektroantriebs außen zugänglich ist, läßt er sich leicht mit dem Treiborgan (Treibscheibe oder Seilrolle) unmittelbar verbinden oder gar baulich integrieren bzw. mit dem Treiborgan einstückig ausführen.

Der Außenläufermotor ist als kleiner Asynchronmotor, wobei der Läufer mit einer Kurzschlußwicklung versehen ist, als Antrieb für Phono- und Magnetbandgeräte bekannt. Demgegenüber wird mit der Erfindung für den Außenläufermotor nicht nur eine neue Einsatzmöglichkeit geschaffen, sondern auch im Rahmen einer Ausbildung der Erfindung von der üblichen Außenläufermotor-Bauweise abgewichen: Mit Vorteil wird der Außenläufermotor zum Betrieb als Synchronmotor ausgebildet, bei dem durch das Zusammenwirken eines vom Ständer herrührenden Drehfeldes mit einem vom Läufer herrührenden Drehfeldes bei jeder Drehzahl, bei der beide Drehfelder relativ zueinander in Ruhe sind, ein synchrones Drehmoment entsteht. Damit wird für den Elektroantrieb der Hebevorrichtung der Vorteil eines hohen Wirkungsgrads mit der Möglichkeit der gleichzeitigen Abgabe von Blindleistung sowie der geringeren Anfälligkeit gegen Spannungsabsenkungen einschließlich größerer mechanischer Unempfindlichkeit (größerer Luftspalt) erzielt. Eine zweckmäßige Weiterführung dieser Erfindungsausbildung besteht darin, daß der Außenläufer-Synchronmotor mit einer Dauermagneterregung versehen wird, die an der gekrümmten Innenmantelfläche des Außenläufers, die dem Ständer gegenüberliegt, angebracht ist, während der Ständer zu seiner Bestrohmung vom Netz aus ein oder mehrere Windungen bzw. Wicklungen aufweist.

Zur weiteren Erhöhung des Wirkungsgrads sowie der elektromotorischen Kraft des Elektroantriebs wird nach einer Ausbildung der Erfindung der Elektroantrieb für die Hebevorrichtung außerordentlich hochpolig ausgeführt, nämlich mit einer Polpaarzahl von wenigstens 20. Damit erhöht sich die Erregerfrequenz und die elektromotorische Kraft, wodurch sich ein hoher Wirkungsgrad ergibt. Dieser kann in Verbindung mit kleinen Wickelköpfen größer als 60% sein. Es läßt sich bei geringen Magneteinsatz, großem Außendurchmesser (welche bei den letztgenannten Charakteristika für Außenläufermotoren jeweils spezifisch sind) ein hohes Drehmoment mit niedrigen Verlusten erzeugen.

Nach einer anderen besonderen Ausbildung der Erfindung ist die Anzahl der Schaltverbindungen in den Ständerwicklungen und/oder zwischen den einzelnen Ständerspulen kleiner als die Polpaarzahl des Elektromotors. Eine weitere bauliche Maßnahme besteht zweckmäßigerweise darin, die Aufnahme- bzw. Wicklungsnuten im Ständer gegenüber der Antriebs- bzw. Ständerachse schräg verlaufen zu lassen.

Insbesondere im Aufzugbau ist es anzustreben, für den Elektroantrieb wenig Bauraum zu benötigen. Diesem Ziel wird man bereits mit der erfindungsgemäßen Verwendung des Außenläufermotors (großer Durchmesser, kurze axiale Länge) gerecht. Dieses Ziel läßt sich aber noch weiter dadurch fördern, daß bei der Konstruktion und der Gestaltung des Außenläufermotors darauf geachtet wird, daß die axiale Ausladung des Wickelkopfes nicht größer als 60 mm, vorzugsweise nicht größer als 45 mm ist. Der Anforderung nach kleiner axialer Länge wird auch mit einer Ausbildung der Erfindung Rechnung getragen, wonach das Verhältnis aus Motormoment [Nm] zur Paketlänge [mm] mindestens 6, vorzugsweise 10 [Nm/mm] beträgt.

Wegen Notfälle und aus Sicherheitsgründen müssen Hebevorrichtungen, insbesondere Personenaufzüge, mit zuverlässigen Bremseinrichtungen versehen sein. In dieser Hinsicht ist nach einer vorteilhaften Ausbildung der Erfindung die Bremseinrichtung der Außenmantelfläche und/oder der Stirnseite des Außenläufers derart gegenüberliegend angeordnet, daß das oder die Bremselemente, beispielsweise Bremsbacke, der Bremseinrichtung mit der Außenmantelfläche und/oder Stirnseite in beispielsweise reibschlüssigem Eingriff bringbar sind. Dazu ist es zweckmäßig, den Außenläufer auf seiner der Bremseinrichtung gegenüberliegenden Seite mit einem besonderen Brems- und/oder Reibbelag zu versehen. Mit dieser erfindungsgemäßen Verwendung wird vorteilhaft der große Außendurchmesser des Außenläufers, der wegen des entstehenden langen Hebelarmes ein hohes Bremsmoment zuläßt, ausgenutzt.

Um besonders hohen Sicherheitsanforderungen zu genügen, umfaßt nach einer anderen Ausführung der Erfindung die Bremseinrichtung zwei voneinander separat ausgeführte und unabhängig betätigbare Bremselemente, beispielsweise Brems-Außenbacken. Mit der Verwendung von Außenbackenbremsen allgemein läßt sich der Umstand vorteilhaft ausnutzen, daß der sich bewegende Umfang des Außenläufermotors für externe Aggregate und/oder reibendem Eingriff besonders leicht zugänglich ist.

Weitere Einzelheiten, Merkmale, Vorteile und Wirkungen auf der Basis der Erfindung ergeben sich aus den Unteransprüchen sowie der nachfolgenden Beschreibung bevorzugter Ausführungsbeispiele der Erfindung und den Zeichnungen. Diese zeigen in:
- Fig. 1: einen erfindungsgemäßen Aufzugmotor in Seitenansicht, und
- Fig. 2: einen erfindungsgemäßen Aufzugmotor mit Bremseinrichtung in Stirnansicht.

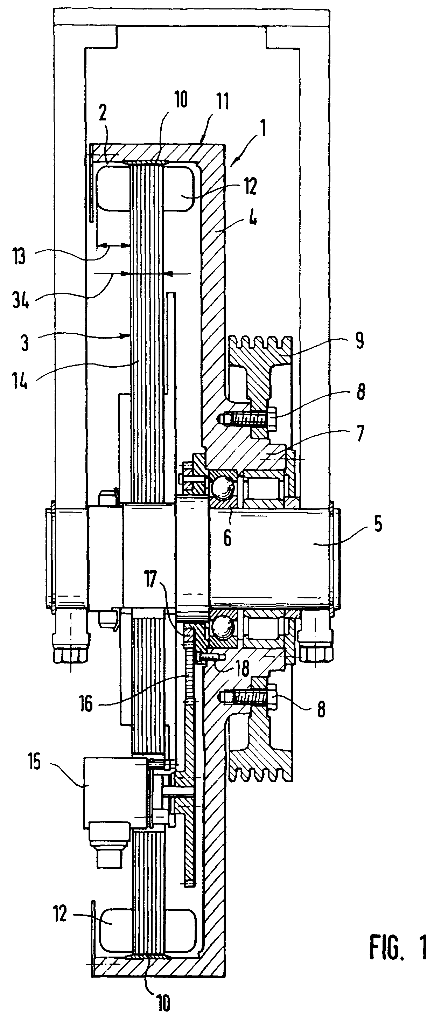

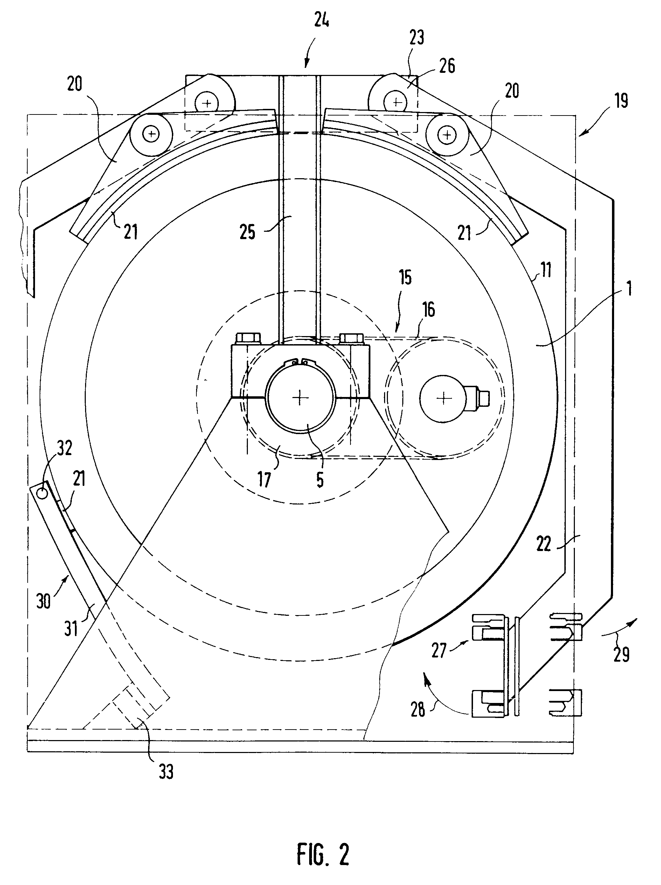

Gemäß Fig. 1 weist der dargestellte Aufzugmotor einen Außenläufer 1 auf, der über einen dazwischen angeordneten Luftspalt 2 einen Ständer 3 ringartig und/oder konzentrisch umgibt. Der Außenläufer 1 ist mit seiner Stirnwandung 4 gegenüber der Motorachse 5 mittels Kugellager 6 drehbar gelagert. In diesem Lagerbereich ist die Läufer-Stirnwand 4 mit einem axial vorspringenden Ansatz 7 versehen, an bzw. auf dem mittels Schraubmittel 8 eine Seilrolle 9 für den (nicht gezeichneten) Fahrkorb des Aufzugs befestigt ist. Dadurch wird bei Drehung des Außenläufers 1 die Seilrolle 9 mitgedreht. An der am Luftspalt 2 angrenzenden Innenmantelfläche des Außenläufers sind mehrere Dauermagnetplättchen 10 kranzartig um die Motorachse 5 herum verteilt angeklebt. Die Außenmantelfläche 11 des Außenläufers 1 kann für eine gegenüberliegende Bremseinrichtung (vgl. Fig. 2) mit einem besonderen Reibbelag versehen sein.

Der Dauermagneterregung 10 am Außenläufer 1 zugeordnet sind ein oder mehrere Ständerwicklungsköpfe 12, deren Ausladung bzw. Überstand 13 gegenüber ein von den Wicklungen umgebenes Elektroblechpaket 14 möglichst kleiner als 60, vorzugsweise 45 mm ist. Der Ständer 3 ist mit seinem Paket 14 aus geblechtem Eisen ortsfest auf der Motorachse 5 befestigt.

Um den Betrieb einer selbstgeführten Synchronmaschine realisieren zu können, ist am Ständer 3 zwischen Wicklungskopf 12 und Motorachse 5 eine Einrichtung 15 zum Messen der Winkelstellung des Außenläufers 1 bzw. der Felder der Dauermagnetplättchen 10 angebracht. Die Winkelmeßeinrichtung 15 besitzt einen Zahnriemen 16, der mit einem Zahnrad 17 in Eingriff steht, das über eine Schraubverbindung 18 an der Innenseite der Läufer-Stirnwand 4 befestigt ist. Dadurch wird der Zahnriemen 16 entsprechend der Drehung des Außenläufers 1 mitgedreht, so daß die Drehstellung des Außenläufers 1 in der Meßeinrichtung 15 erfaßt und zur Steuerung der Bestromung der Ständerwicklung verwendet werden kann. Eine weitere Darstellung der Winkelmeßeinrichtung 15 ist in Fig. 2 in Stirnansicht ersichtlich.

Gemäß Fig. 2 ist der am Außenmantel ausgebildeten Reibfläche 11 des Außenläufers 1 eine Doppel-Außenbackenbremse 19 zugeordnet. Diese besitzt zwei voneinander unabhängig betätigbare und separat ausgeführte Bremsbacken 20 mit jeweiligem Bremsbelag 21 zur Auflage auf dem Außenmantel bzw. der Reibfläche 11 des Außenläufers 1. Die beiden Bremsbacken 20 lassen sich jeweils mit der Reibfläche 11 des Außenläufers 1 in Eingriff bringen oder davon lösen, jeweils mittels eines Betätigungshebels 22 (der Übersichtlichkeit halber nur in der rechten Hälfte in Fig. 2 gezeichnet), der mit seinem einen Ende am rechten Querstegende 23 eines T-förmigen Trägers 24 verschwenkbar angelenkt ist. Mit seinem mittleren Vertikalsteg 25 ist der T-Träger 24 an der Motorwelle 5 ortsfest abgestützt. Das seinem Anlenkende 26 entgegengesetzte Ende des Betätigungshebels 22 ist mittels eines Federmechanismus 27 entsprechend dem Uhrzeigersinn 28 gezogen, so daß der Bremsbelag 21 nach radial innen auf den Reibbelag 11 des Außenläufers 1 gedrückt werden kann. Soll zum Drehen des Außenläufers 1 die Bremse gelüftet werden, wirkt dem Federmechanismus 27 ein (nicht gezeichneter) Elektromagnet entgegen, der dem Betätigungshebel 22 eine Lüftungsverschwenkung 29 entgegen dem Uhrzeigersinn erteilt, wodurch der Bremsbacken 20 mit dem Bremsbelag 21 nach radial außen bewegt und vom Reibbelag 11 des Außenläufers 1 abgehoben wird. In gleicher Struktur (nicht gezeichnet) wird auch der in Fig. 2 linke Bremsbacken 20 in Eingriff mit dem Reibbelag 11 des Außenläufers 1 gebracht oder von diesem abgehoben, wobei insbesondere dem (nicht gezeichneten) Betätigungshebel ein eigener Federmechanismus mit eigens betätigbaren Elektromagneten zugeordnet ist.

Alternativ oder zusätzlich kann die Bremseinrichtung nach der Erfindung mit einer Backenbremsenvariante 30 realisiert sein, bei der der Bremsbelag 21 an der dem Reibbelag 11 des Außenläufers 1 zugewandten Seite eines Bremshebels 31 angebracht ist. Am einen Ende, in dessen Bereich sich der Bremsbacken 21 befindet, ist der Bremshebel 31 mit einer Gelenkstelle 32 versehen, worüber er verschwenkbar angelenkt ist. Auf das andere Ende des Bremshebels 21 wirkt ein (schematisch gezeichneter) Elektromagnet 33 ein, dem eine Zug- oder Druckfeder (nicht gezeichnet) entgegengerichtet sein kann. Mittels des Hebelarms des Bremshebels 31 läßt sich eine Verringerung der vom Elektromagneten 33 oder von dem Federmechanismus aufzubringenden Kraft erzeugen.

## Patentansprüche

1. Hebevorrichtung, insbesondere Aufzug, mit einem rotatorischen getriebelosen Elektro-Außenläufermotor, dessen Außenläufer (1) den Ständer (3) koaxial und/oder ringförmig umgibt und mit einem Treiborgan, beispielsweise Treibscheibe oder Seilrolle (9), gekoppelt ist, und das Treiborgan mit einem linear geführten Fahrbehältnis zum Transport von Sachen und Personen verbunden ist, wobei der Ständer (3) des Außenläufermotors mit einem oder mehreren Paketen (14) aus geschichteten und gegeneinander isolierten Elektroblechen gebildet ist, **dadurch gekennzeichnet, daß** der Außenläufermotor zum Betrieb als Synchronmotor ausgebildet ist und eine Einrichtung zur Dauermagneterregung an der Innenmantelfläche des Außenläufers (1) aufweist, die dem Ständer (3) gegenüberliegt, der zu seiner Bestromung Windungen und/oder eine oder mehrere Spulen oder Wicklungen (12) aufweist, wobei die Polpaarzahl des Außenläufermotors wenigstens zwanzig, und das Verhältnis von dessen Moment zur in axialer oder achsparalleler Richtung gemessenen Paketlänge (34) wenigstens 6 (Nm/mm), insbesondere 10 (Nm/mm) betragen.

2. Vorrichtung nach Anspruch 1, dadurch gekennzeichnet, daß die Einrichtung zur Dauermagneterregung mit einem oder mehreren Dauermagnetelementen (10) gebildet ist, die an der am Luftspalt (2) zum Ständer (3) angrenzenden Innenmantelfläche des Läufers (1) angebracht, vorzugsweise angeklebt sind.

3. Vorrichtung nach Anspruch 2, dadurch gekennzeichnet, daß der Außenläufer aus Stahl oder aus Metall im Gießverfahren, insbesondere mit Grauguß, gebildet ist3. Vorrichtung nach Anspruch 2, dadurch gekennzeichnet, daß der Außenläufer aus Stahl oder aus Metall im Gießverfahren, insbesondere mit Grauguß, gebildet ist, wobei auf seiner Innenmantelfläche Dauermagneten zur Dauermagneterregung aufgeklebt sind.

4. Vorrichtung nach einem der vorangehenden Ansprüche, dadurch gekennzeichnet, daß die Anzahl der Schaltverbindungen in den Ständerwicklungen und/oder zwischen den einzelnen Ständerspulen kleiner als die Polpaarzahl des Elektromotors ist.

5. Vorrichtung nach einem der vorangehenden Ansprüche, dadurch gekennzeichnet, daß der Ständer des Elektromotors Wicklungsnuten aufweist, die gegenüber der Motor- beziehungsweise Ständerachse (5) schräg verlaufen.

6. Vorrichtung nach einem der vorangehenden Ansprüche, wobei der Ständer (3) des Elektromotors zu seiner Bestromung mit Wicklungen versehen ist, dadurch gekennzeichnet, daß die axiale Ausladung (13) des Wickelkopfes (12) kleiner als 60, insbesondere 45 Millimeter ist.

7. Vorrichtung nach einem der vorangehenden Ansprüche, dadurch gekennzeichnet, daß der Außenläufer (1) mit dem Treiborgan unmittelbar in Direktantriebstechnik verbunden ist.

8. Vorrichtung nach einem der vorangehenden Ansprüche, dadurch gekennzeichnet, daß eine Bremseinrichtung (19) der Außenmantelfläche (11) und/oder Stirnseite des Außenläufers (1) derart gegenüberliegend angeordnet ist, daß ihr(e) Bremselement(e) (20,21) mit der Außenmantelfläche (11) und/oder Stirnseite in Eingriff bringbar sind.

9. Vorrichtung nach Anspruch 8, dadurch gekennzeichnet, daß der Außenläufer (1) auf seiner der Bremseinrichtung (19) gegenüberliegenden Seite mit einem Brems- und/oder Reibbelag (11) versehen ist.

10. Vorrichtung nach Anspruch 8 oder 9, dadurch gekennzeichnet, daß die Bremseinrichtung (19) mit einer oder mehreren Außenbackenbremsen (20,21,22), insbesondere mit einer Doppelbackenbremse, ausgeführt ist.

11. Vorrichtung nach Anspruch 10, dadurch gekennzeichnet, daß die Bremsbacken (20) der mehreren Außenbackenbremsen (20,21,22) voneinander separat ausgeführt und voneinander unabhängig betätigbar (22,27) sind.

12. Verwendung der gekrümmten Außenmantelfläche (11) und/oder der Stirnseite des Außenläufers (1) des Elektromotors in einer Hebevorrrichtung nach einem der vorangehenden Ansprüche als mit einer Bremseinrichtung (19) zusammenwirkenden Bremsfläche.
